# EUROPÄISCHE PATENTSCHRIFT

(11) **EP 2 064 010 B1**
(45) Veröffentlichungstag und Bekanntmachung des Hinweises auf die Patenterteilung: **27.02.2013**
(21) Anmeldenummer: 07802854.5
(22) Anmeldetag: 24.08.2007
(51) Int. Cl.: B21D 26/00, B21D 39/14, B21D 26/02

(54) **KUGELAUTOFRETTAGE**
AUTOFRETTAGE BY MEANS OF A BALL
AUTO-FRETTAGE PAR SPHÈRE

(30) Priorität: 16.09.2006 DE 102006043590
(43) Veröffentlichungstag der Anmeldung: 03.06.2009
(73) Patentinhaber: Sandvik Materials Technology Deutschland GmbH, 40549 Düsseldorf (DE)
(72) Erfinder: STRACKERJAHN, Henrich, 33332 Gütersloh (DE); GÖKEN, Matthias, 33330 Gütersloh (DE)
(74) Vertreter: WSL Patentanwälte Partnerschaftsgesellschaft
(86) Internationale Anmeldenummer: PCT/EP2007/058805
(87) Internationale Veröffentlichungsnummer: WO 2008/031703

(56) Entgegenhaltungen:
- DE-A1- 10 215 554
- DE-A1- 19 757 962
- JP-A- 60 040 624
- JP-A- 60 210 332
- JP-A- 2003 277 826
- US-A- 3 427 843
- US-A- 3 852 871

## Beschreibung

Die Erfindung betrifft ein Verfahren zur Erhöhung der dynamischen Druckbeständigkeit bzw. Biegewechselfestigkeit eines metallischen Bauteils für Hochdruckanwendungen mit rohrförmigem Innenraum, insbesondere von metallischen Rohrkomponenten, Fittingen und sonstigen druckführenden Bauteilen.

### Hintergrund der Erfindung

Druckführende Rohrleitungen und andere Bauteile werden in vielen technischen Bereichen eingesetzt, wie beispielsweise in der Hochdrucktechnik und in der chemischen Industrie. Man unterscheidet zwischen statischer (gleichbleibender) und dynamischer (wechselnder oder pulsierender) Druckbelastung. In vielen Anwendungen werden druckführende Bauteile häufig einer wechselnden oder pulsierenden Druckbelastung ausgesetzt, die je nach Belastungsniveau zu einem mehr oder weniger schnellen Versagen des Bauteils führt. Einflußgrößen der Belastung sind z.B. das Druckkollektiv, die Frequenz der Druckwechsel und das Druckdelta (Differenz zwischen Maximaldruck und Minimaldruck). Die dynamische Druckbeständigkeit bzw. Lebensdauer von einzelnen Komponenten liegt dabei weit unterhalb derjenigen, die ein solches Rohr oder Bauteil bei einer statischen Druckbelastung erreichen würde.

Die statische Druckbeständigkeit von Bauteilen hängt unter anderem von den mechanischen Eigenschaften des Werkstoffs ab, wie der Dehngrenze (Rp_{0,2}) und der Zugfestigkeit (Rₘ). Die dynamische Druckbeständigkeit wird von weiteren Parametern bestimmt, wie zum Beispiel der Duktilität (Bruchdehnung A) des Werkstoffs, der Tiefe von vorhandenen Anrissen in der Rohrwand, dem Reinheitsgrad und dem Mikrogefüge.

Das Versagen von Rohren und anderen Bauteilen aufgrund dynamischer Belastung erfolgt durch ein kritisches Rißwachstum, zum Beispiel von der Rohrinnenoberfläche zur Rohraußenoberfläche. Dabei können Risse durch lokale Spannungskonzentrationen z.B. an intermetallischen Einschlüssen entstehen, oder bereits vorhandene Anrisse setzen sich weiter fort. Die Lebensdauer eines Rohrs oder eines anderen Bauteils unter dynamischer Druckbelastung hängt somit unter anderem von der Größe des Rißwachstums pro Druckstoß und der Materialstärke ab.

Um die dynamische Lebensdauer von Komponenten in einem bestimmten Belastungskollektiv zu erhöhen, optimiert man die vorgenannten Einflußgrößen bei der Herstellung des Werkstoffs und/oder nutzt Verfahren, um bestimmte Materialeigenschaften nachträglich zu verbessern, wie beispielsweise die Autofrettage.

Autofrettage bezeichnet ein Verfahren zur Steigerung der Dauerfestigkeit von Bauteilen der Hochdrucktechnik. Dabei werden Rohre und sonstige Bauteile einmalig und nur für wenige Sekunden bis auf ca. 80 % ihres rechnerischen Berstdrucks belastet, d.h. auch weit oberhalb des rechnerischen statischen Betriebsdrucks. Bei dieser Belastung kommt es oberhalb der Dehngrenze oder Streckgrenze des Werkstoffs zu einem mikroplastischen Fließen in dem Werkstoff, und in dem Material des Werkstoffs werden Druckeigenspannungen erzeugt. Bei Entlastung des Bauteils verbleiben diese Eigenspannungen in dem Werkstoff und verhindern bzw. vermindern das Wachstum von Mikroanrissen. Da die Autofrettage die mechanischen Eigenschaften des autofrettierten Werkstoffs nur unerheblich beeinflußt, hat sie damit kaum einen Einfluß auf die statische Druckbeständigkeit des Rohres oder Bauteils, sondern vielmehr auf die dynamische Druckbeständigkeit.

Ein Nachteil der Autofrettage ist, daß dieses Verfahren bezüglich der benötigten Drücke und der statischen Druckbelastbarkeit der zu autofrettierenden Bauteile limitiert ist. In einigen Fällen bzw. für bestimmte Materialien müßten zum Erreichen zufriedenstellender Ergebnisse in den Bauteilen rechnerisch Drücke über 15.000 bar, beispielsweise Drücke von 18.000 bis 22.000 bar, erzeugt werden, was anlagentechnisch nur extrem aufwendig bzw. derzeit technisch noch gar nicht umzusetzen ist. Des weiteren ist die Höhe der lokal erzeugbaren Druckeigenspannungen begrenzt, weil der Autofrettagedruck nicht beliebig erhöht werden kann, da ansonsten das Bauteil bersten würde. Das Verfahren der Autofrettage ist somit technisch limitiert, kann für viele Materialien die rechnerisch erforderlichen Drücke überhaupt nicht bereitstellen und ist zudem sehr kostenintensiv und aufwendig.

Die US 3,427,843 beschreibt ein Verfahren zum Herstellen von dünnwandigen Rohren aus besonders spröden Werkstoffen, beispielsweise aus Molybdän, die durch klassische Umformverfahren, wie z.B. Ziehen oder Walzen, nicht umgeformt werden können. Da die bekannten Verfahren zur Herstellung von Rohren aus brüchigen Materialien mittels einer Domstange zeitaufwendig sind und zu Komplikationen beim Herausziehen der Domstange aus dem Rohr nach der Herstellung führen, wird zur Überwindung dieses Problems vorgeschlagen, die Wände eines rohrförmigen Formlings zu verdünnen, indem man durch den Formling einen Pfropfen oder eine Kugel mit einem größeren Durchmesser als der Innendurchmesser des rohrförmigen Formlings hindurchdrückt. Dabei liegt der rohrförmig Formling in einer Hülle, welche dem Außendurchmesser des herzustellenden Rohres entspricht und die Wände des aus dem brüchigen Material herzustellenden Rohres von außen stützt. Dadurch soll verhindert werden, dass das Rohr bei dieser Herstellungsmethode aufgrund der Brüchigkeit des Materials zerstört wird. Bei dem Verfahren sollen axiale Zugbelastungen Im Rahmen der Umformung vermieden werden, damit der spröde Werkstoff nicht bricht Das Verfahren ist ein reines Formgebungsverfahren zur Herstellung eines dünnwandigen Rohres aus einer dickwandigeren rohrförmigen Vorform.

Die JP 2003 277 826 beschreibt ein Verfahren zum Aufweiten und gleichzeitiger Verbesserung der Ermüdungsfestigkeit von zylindrischen Kettengliedern (Hülsen), beispielsweise von einer Fahrradkette, einer Motorradkette oder einer sonstigen Antriebskette für eine Maschine. Dabei werden Kugeln durch sehr kurze rohrförmige Hülsen hindurchgeschoben, wobei die zylindrischen Hülsen eine Aufweitung des Außendurchmessers um wenigstens 0,2% oder mehr erfahren, d. h. es findet eine vollwandige plastische Umformung der Hülse statt.

### Aufgabe der Erfindung

Es besteht daher ein Bedarf nach einem Verfahren zur Erhöhung der dynamischen Druckbeständigkeit bzw. Verbesserung der Lebensdauer von Bauteilen für Hochdruckanwendungen, bei dem die bekannten Nachteile und Beschränkungen der Autofrettage nach dem Stand der Technik überwunden werden.

### Beschreibung der Erfindung

Gelöst wird diese Aufgabe durch ein Verfahren zur Erhöhung der dynamischen Druckbeständigkeit eines metallischen Bauteils für Hochdruckanwendungen mit rohrförmigem Innenraum gemäß Anspruch 1.

Das erfindungsgemäße Verfahren hat gegenüber der für diesen Zweck eingesetzten Autofrettage eine Reihe von Vorteilen:
a) Die benötigten Drücke zum Bewegen der Hartmetallkugel durch das Innere des rohrförmigen Innenraums liegen weit unter den Drücken, die bei dem Verfahren der Autofrettage aufzubringen sind. Dies hat anlagentechnische Vorteile, spart erhebliche Kosten für Vorrichtungen zur Erzeugung extrem hoher Drücke ein, und die Drücke brauchen nicht bis nahe an die Belastungsgrenze des Metalls heranzugehen, wie dies bei der Autofrettage der Fall ist.
b) Bei dem erfindungsgemäßen Verfahren werden vorhandene Oberflächenanrisse an der Innenwand des rohrförmigen Innenraums teilweise oder vollständig entfernt, wodurch die Gefahr der Rißbildung und Rißfortsetzung im Hochdruckbetrieb erheblich verringert wird.
c) Die in dem Material durch das erfindungsgemäße Verfahren erzeugten Druckeigenspannungen haben den gleichen oder besseren positiven Effekt, als das Verfahren der Autofrettage.
d) Durch das erfindungsgemäße Verfahren werden darüber hinaus Schwankungen des Innendurchmessers des rohrförmigen Innenraums des Bauteils, die bei der Herstellung entstehen können, korrigiert.
e) Durch das erfindungsgemäße Verfahren wird weiterhin die Innenwand des rohrförmigen Innenraums geglättet, so daß die Oberflächenrauhigkeit der Innenwand erheblich abnimmt, was in vielen Anwendungen für die Strömungseigenschaften innerhalb des Bauteils vorteilhaft ist.
f) Die durch das erfindungsgemäße Verfahren bearbeiteten Bauteile weisen eine deutlich höhere dynamische Druckbeständigkeit im Vergleich zu autofrettierten Bauteilen auf.

Metallischen Bauteile für Hochdruckanwendungen mit rohrförmigem Innenraum umfassen sämtliche Bauteile eines druckführenden Systems, soweit sie rohrförmige Innenräume aufweisen. Dies sind bevorzugt Rohre, für die Leitung von Flüssigkeiten oder Gasen, aber auch Fittinge, Anschlußstücke, T-Stücke, Rohrkreuzungen, Ventile, Ventilsitze und andere Bauteile.

In der Hochdrucktechnik werden unterschiedliche metallische Werkstoffe für die Herstellung von Rohren und anderen Bauteilen verwendet. Dabei handelt es sich hauptsächlich um unlegierte, niedriglegierte und hochlegierte Stähle. Besonders hohe dynamische Druckbeständigkeit wird bei Rohren oder anderen Bauteilen aus hochlegiertem Stahl erreicht, der kaltverfestigt oder vergütet und anschließend nach dem erfindungsgemäßen Verfahren behandelt wurden, wie die nachfolgend beschriebenen Beispiele zeigen.

In einer bevorzugten Ausführungsform der Erfindung liegt der Druck, mit dem die Hartmetallkugel durch den rohrförmigen Innenraum des Bauteils gedrückt wird, im Bereich von 3000 bis 6000 bar, vorzugsweise im Bereich von 3500 bis 5500 bar. Die Anwendung eines Drucks von weniger als 2000 bar hat zur Folge, daß sich die Kugel ungleichmäßig durch den rohrförmigen Innenraum des Bauteils bewegt oder darin stecken bleibt.

In einer weiteren bevorzugten Ausführungsform der Erfindung wird der Druck, mit dem die Hartmetallkugel durch den rohrförmigen Innenraum des Bauteils gedrückt wird, mittels eines unter Druck stehenden Öls erzeugt. Es wird unterschieden zwischen einem "Anschubdruck", der erforderlich ist, um Reibungs- und andere Widerstände zu überwinden und die Hartmetallkugel aus der Ruheposition im rohrförmigen Innenraum des Bauteils in Bewegung zu versetzen, und einem "Bewegungsdruck", der erforderlich ist, um die Hartmetallkugel nach dem Anschub im rohrförmigen Innenraum des Bauteils in Bewegung zu halten. Der Anschubdruck ist stets erheblich höher als der Bewegungsdruck. Beide Drücke hängen von verschiedenen Parametern ab, insbesondere der mechanischen Festigkeit des Werkstoffs und dem Unterschied zwischen dem Außendurchmesser der Hartmetallkugel und dem Innendurchmesser des rohrförmigen Innenraums des Bauteils.

Trotz der erheblichen Kraft, die erforderlich ist, um die Hartmetallkugel mit größerem Durchmesser als dem Innendurchmesser des rohrförmigen Innenraums des Bauteils durch das Bauteil zu pressen, ist der in dem erfindungsgemäßen Verfahren erforderliche Druck erheblich niedriger als bei der bekannten Autofrettage, um gleiche oder bessere Ergebnisse hinsichtlich der dynamischen Druckbeständigkeit zu erzielen.

In einer weiteren bevorzugten Ausführungsform der Erfindung ist der Durchmesser der Hartmetallkugel um 1,5 bis 4 %, besonders bevorzugt um 2 bis 3 % größer als der Innendurchmesser des rohrförmigen Innenraums des Bauteils vor dem Hindurchdrücken der Hartmetallkugel. Ein zu großer Durchmesser der Kugel hat zur Folge, daß sich die Kugel nicht bewegt bzw. im rohrförmigen Innenraum des Bauteils stecken bleibt. Bei einem zu kleinen Durchmesser werden zu geringe Druckeigenspannungen in das Material eingebracht.

In einer weiteren Ausführungsform des erfindungsgemäßen Verfahrens werden mehrfach nacheinander, vorzugsweise zwei bis vier mal nacheinander, besonders bevorzugt zwei mal nacheinander Hartmetallkugeln unter Hochdruck durch den rohrförmigen Innenraum des Bauteils gedrückt, wobei die Hartmetallkugeln in der Reihenfolge, in der sie nacheinander unter Hochdruck durch den rohrförmigen Innenraum des Bauteils gedrückt werden, zunehmende Durchmesser aufweisen.

Auf diese Weise kann die Innenoberfläche des Bauteils in mehreren Stufen bearbeitet werden. Nach dem Hindurchdrücken einer ersten Hartmetallkugel durch das Innere des Bauteils erweitert sich der Innendurchmesser des rohrförmigen Innenraums des Bauteils, wobei die Innenoberfläche bereits die beschriebene Verbesserung der Materialeigenschaften erfährt. Anschließend wird eine weitere Hartmetallkugel mit einem größeren Durchmesser durch das Innere des Bauteils gedrückt, um eine weitere Verbesserung der Materialeigenschaften, der Innenoberfläche des Bauteils und der aus dem Verfahren resultierenden dynamischen Druckbeständigkeit zu erreichen. Auf diese Weise können zwei, drei, vier oder mehr Hartmetallkugeln mit zunehmendem Durchmesser nacheinander durch das Innere des rohrförmigen Innenraums des Bauteils gedrückt werden, um die gewünschten Eigenschaften zunehmend zu verbessern. Es hat sich als besonders vorteilhaft und für das Erreichen hervorragender Ergebnisse ausreichend erwiesen, wenn der Vorgang genau zwei mal wiederholt wird, d. h. genau zwei Hartmetallkugeln mit zunehmendem Außendurchmesser nacheinander durch ein Bauteil gedrückt werden. Die Anzahl der Wiederholungen und die Auswahl der jeweiligen Durchmesser sowie der anzuwendenden Drücke der Hartmetallkugeln werden jedoch vom Material und den jeweiligen Abmessungen des rohrförmigen Innenraums des Bauteils abhängen. Die geeigneten Parameter zur Herstellung von Bauteilen für bestimmte dynamische Druckbelastungen lassen sich durch wenige Experimente und durch Erstellung von Wöhler-Kurven bestimmen. Wöhler-Kurven sind dem Fachmann auf dem Gebiet bekannt und dienen ihm zur Auswahl der geeigneten Bauteile, Materialien und Bearbeitungsparameter für vorgegebene Anwendungen.

Der Begriff "Hartmetallkugel" im Sinne der vorliegenden Erfindung bezeichnet eine Kugel aus einem Material, das härter ist als das Material des zu bearbeitenden Bauteils, so daß sich beim Hindurchdrücken der Hartmetallkugel durch das Innere des rohrförmigen Innenraums des Bauteils nicht die Hartmetallkugel verformt, sondern das Material des Bauteils. Der Begriff "Hartmetall" ist in diesem Zusammenhang nicht auf Sintercarbide im klassischen Sinne beschränkt, sondern umfaßt alle Materialien, die härter sind als das Material des zu bearbeitenden Bauteils. Besonders bevorzugt besteht die Hartmetallkugel jedoch aus WC-Sintercarbid oder SiC-Sintercarbid. Geeignet sind jedoch auch Hartmetallkugeln aus Kaltarbeitsstählen, wie z.B. solchen der Werkstoffnummern 1.2002, 1.2067 oder 1.4021 gemäß DIN EN 10027-1+2 bzw. DIN 17007.

### Beispiele

Zur Durchführung des erfindungsgemäßen Verfahrens wurden Rohre aus zwei verschiedenen hochlegierten Stählen mit austenitischer Gefügestruktur getestet:
(1) Sandvik TP316L
   (= Werkstoff-Nr. 1.4404 = X2CrNiMo17-12-3; Sandvik P&P, Werther, Deutschland)
(2) Sandvik HP160
   (keine Werkstoff-Nr. vergeben; Sandvik P&P, Werther, Deutschland)

Die Proben aus den beiden Werkstoffen hatten jeweils eine Länge von ca. 220 mm, einen Innendurchmesser von 4,7 mm und einen Außendurchmesser von 14,3 mm. Die Proben lagen jeweils im kaltverfestigten Zustand vor. Die Richtanalysen der Werkstoffe sind in Tabelle 1 angegeben.

**Tabelle 1: Richtanalysen der Werkstoffe TP316L und HP160:**

| Werkstoff | C | Si | Mn | P | S | Cr | Mo | Ni | Nb | N | Cu | Fe |
|---|---|---|---|---|---|---|---|---|---|---|---|---|
| | max | max | max | max | max | | | | | | max | |
| HP160 | 0,06 | 0,60 | 4,25 | 0,025 | 0,003 | 19,5 bis 22,0 | 2,0 bis 3,0 | 9,0 bis 11,0 | 0,25 bis 0,8 | 0,25 bis 0,50 | 0,20 | Rest |
| TP316L | 0,03 | 1,00 | 2,00 | 0,04 | 0,015 | 16,50 bis 18,50 | 2,00 bis 2,50 | 10,00 bis 14,00 | --- | <0,11 | --- | Rest |

Die Rohre wurden nach der Warmfertigung (Erschmelzung, Billetherstellung, Strangpressen) einer Behandlung durch Kaltpilgern mit einer Querschnittsreduktion von 60-90 %, Lösungsglühen bei 1120°C und Kaltziehen mit einer Querschnittsreduktion von 10-20 % (HP160) bzw. 30-40% (TP316L) unterzogen. Die mechanischen Richtwerte der so kaltverfestigten Proben sind in Tabelle 2 angegeben.

**Tabelle 2: Mechanische Richtwerte für TP316L und HP160:**

| Werkstoff | Dehngrenze R_{p0,2} [MPa] | Zugfestigkeit Rₘ[MPa] | Bruchdehnung A [%] |
|---|---|---|---|
| HP160 | > 1.100 | > 1.200 | > 12 |
| TP316L | > 600 | > 700 | > 16 |

Die Proben wurden anschließend jeweils einer der nachfolgend angegebenen Nachbehandlungen **1** bis **4** unterzogen und hinsichtlich ihrer dynamischen Druckbeständigkeit getestet.

Nachbehandlungen der kaltverfestigten Proben:

| **1** | **keine Nachbehandlung** | | |
|---|---|---|---|
| **2** | **Autofrettage:** | | |
| | | Autofrettagedruck: | HP160: 12.000 bar |
| | | | TP316L: 6.000 bar |
| | | Haltezeit: | 5 min |
| | | Medium: | Hydrauliköl |

| **3** | **erfindungsgemäße Kugelautofrettage (1 Durchlauf)** | | |
|---|---|---|---|
| | | Kugelmaterial: | Wofframcarbid |
| | | Kugeldurchmesser | 4,76 mm |
| | | Medium: | Hydrauliköl |
| | | Druck: | HP160: 5.000 / 3.200 bar |
| | | | TP316L: 5.000 / 3.200 bar |
| | | | (Anschubdruck / Bewegungsdruck) |

| **4** | **erfindungsgemäße Kugelautofrettage (2 Durchläufe)** | | |
|---|---|---|---|
| | | Kugelmaterial: | Wolframcarbid |
| | | Medium: | Hydrauliköl |
| | 1. Durchlauf wie (c) | | |
| | 2. Durchlauf: | Kugeldurchmesser | 4,79 mm |
| | | Druck: | HP160: 7.000 / 5.000 bar |
| | | | TP316L: 5.000 / 4.000 bar |
| | | | (Anschubdruck / Bewegungsdruck) |

In dem Test auf dynamische Druckbeständigkeit wurden die Probenrohre Lastwechseln unter Öldruck zwischen einem Maximaldruck (Pmax) und einem Minimaldruck (Pmin) mit einer Lastwechselfrequenz von 6 Hz unterzogen. Pmin betrug jeweils 200 bar. Pmax wurde für verschiedene Proben auf 3.000 bar, 3.500 bar oder 4.000 bar eingestellt.

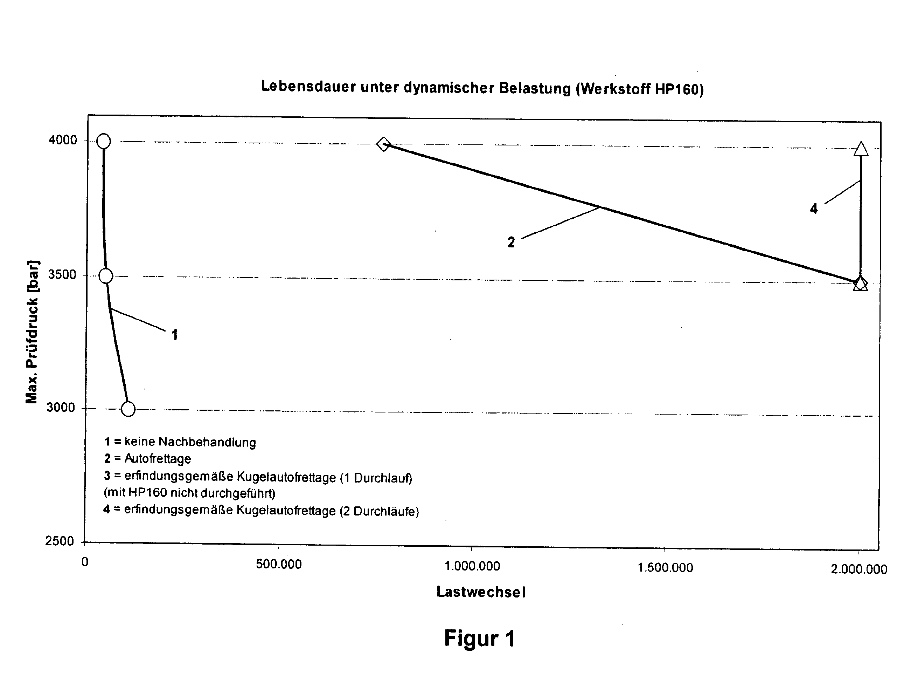

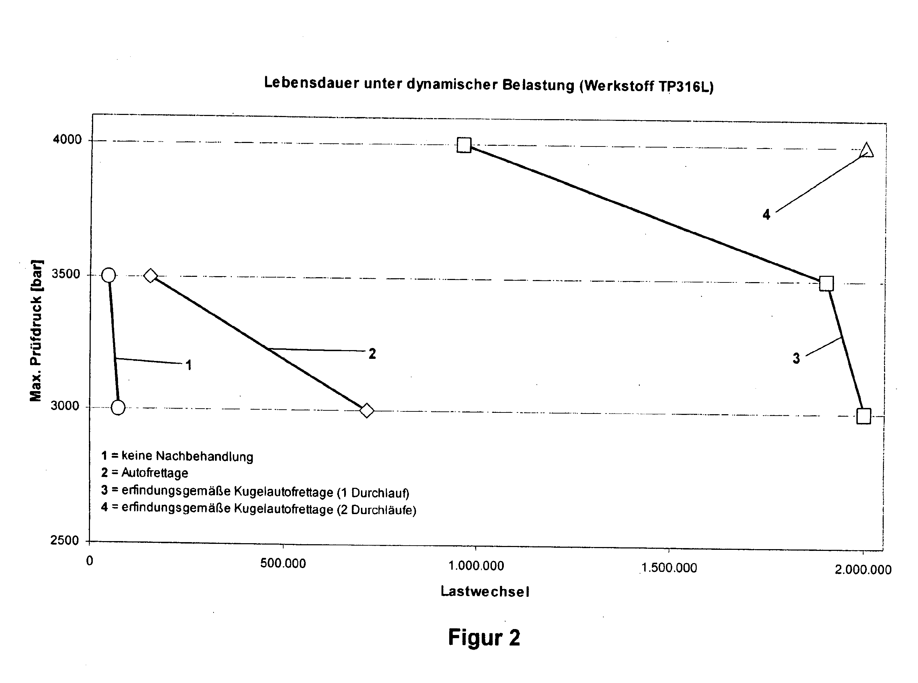

Die Ergebnisse des Tests auf dynamische Druckbeständigkeit sind in Figur 1 für den Werkstoff HP160 und in Figur 2 für den Werkstoff TP316L gezeigt. Auf der Ordinate ist jeweils der Maximaldruck aufgetragen, dem eine Probe unterzogen wurde. Auf der Abszisse sind jeweils die Lastwechsel bis zum Bruch bzw. Bersten einer Probe aufgetragen. Eine Probe wurde als "dauerfest" eingestuft, wenn sie 2 Mio. Lastwechsel zwischen Pmin und Pmax unbeschadet überstand. Der Test wurde für diese Probe dann nach 2 Mio. Lastwechseln abgebrochen.

Die lediglich kaltverfestigten Proben (ohne Nachbehandlung 1) HP160 und TP316L versagten bei Pmax von 3.000, 3.500 und 4.000 bar bereits nach wenigen tausend Lastwechseln.

Durch die herkömmliche Autofrettage (Nachbehandlung 2) konnte die dynamische Druckbeständigkeit der Probe des Werkstoffs TP316L bei einem Pmax von 3.500 bar nicht wesentlich gesteigert werden. Lediglich bei einem Pmax von nur 3.000 bar erreichte dieser herkömmlich autofrettierte Werkstoff eine Lebensdauer in der Größenordnung von etwa 700.000 Lastwechseln. Bei gleicher Nachbehandlung erreichte der Werkstoff HP160 bei einem Pmax von 4.000 bar eine Lebensdauer von etwa 750.000 Lastwechseln und war erst bei einem Pmax von 3.500 bar dauerfest mit einer Lebensdauer von über 2 Mio. Lastwechseln.

Durch das erfindungsgemäße Verfahren konnte die dynamische Druckbeständigkeit der Proben beider Werkstoffe erheblich gesteigert werden. Mit bereits nur einem Durchlauf der erfindungsgemäßen Kugelautofrettage (Nachbehandlung 3) erreichte die Probe des Werkstoffs TP316L bei einem Pmax von 3.500 bar eine Lebensdauer in der Größenordnung von etwa 1,9 Mio. Lastwechseln und war bei einem Pmax von 3.000 bar dauerfest mit über 2 Mio. Lastwechseln (Nachbehandlung **3** für Werkstoff HP160 nicht getestet). Bei Anwendung von 2 Durchläufen der erfindungsgemäßen Kugelautofrettage (Nachbehandlung **4**) waren die Proben beider Werkstoffe bereits bei einem Pmax von 4.000 bar dauerfest.

Die Ergebnisse zeigen, daß durch das erfindungsgemäße Verfahren nochmals eine deutliche Erhöhung der dynamischen Druckbeständigkeit gegenüber der herkömmlichen Autofrettage erreicht wird.

## Patentansprüche

1. Verfahren zur Erhöhung der dynamischen Druckbeständigkeit eines metallischen Bauteils für Hochdruckanwendungen mit rohrförmigem Innenraum, bei dem man eine Hartmetallkugel unter Hochdruck mittels einer unter Druck stehenden Flüssigkeit durch das Innere des rohrförmigen Innenraums drückt, wobei die Hartmetallkugel einen Durchmesser aufweist, der um 1 bis 5 % größer ist als der Innendurchmesser des rohrförmigen Innenraums vor dem Hindurchdrücken der Hartmetallkugel, wobei der Druck, mit dem die Hartmetallkugel durch den rohrförmigen Innenraum des Bauteils gedrückt wird, im Bereich von 2000 bis 7000 bar liegt.

2. Verfahren nach Anspruch 1, **dadurch gekennzeichnet, daß** der Druck, mit dem die Hartmetallkugel durch den rohrförmigen Innenraum des Bauteils gedrückt wird, im Bereich von 3000 bis 6000 bar, vorzugsweise im Bereich von 3500 bis 5500 bar liegt.

3. Verfahren nach einem der Ansprüche 1 oder 2, **dadurch gekennzeichnet, daß** der Druck, mit dem die Hartmetallkugel durch den rohrförmigen Innenraum des Bauteils gedrückt wird, mittels eines unter Druck stehenden Öls erzeugt wird.

4. Verfahren nach einem der Ansprüche 1 bis 3, **dadurch gekennzeichnet, daß** der Durchmesser der Hartmetallkugel um 1,5 bis 4 %, besonders bevorzugt um 2 bis 3 % größer ist als der Innendurchmesser des rohrförmigen Innenraums des Bauteils vor dem Hindurchdrücken der Hartmetallkugel.

5. Verfahren nach einem der Ansprüche 1 bis 4, **dadurch gekennzeichnet, daß** mehrfach nacheinander, vorzugsweise zwei bis vier mal nacheinander, besonders bevorzugt zwei mal nacheinander Hartmetallkugeln unter Hochdruck durch den rohrförmigen Innenraum des Bauteils gedrückt werden, wobei die Hartmetallkugeln in der Reihenfolge, in der sie nacheinander unter Hochdruck durch den rohrförmigen Innenraum des Bauteils gedrückt werden, zunehmende Durchmesser aufweisen.

6. Verfahren nach einem der vorangegangenen Ansprüche, **dadurch gekennzeichnet, daß** das metallische Bauteil aus einem unlegierten, niedriglegierten oder hochlegierten Stahl, vorzugsweise einem hochlegierten Stahl hergestellt ist.

7. Verfahren nach einem der vorangegangenen Ansprüche, **dadurch gekennzeichnet, daß** das metallische Bauteil vor dem Hindurchdrücken der Hartmetallkugel(n) lösungsgeglüht wird.

8. Verfahren nach einem der vorangegangenen Ansprüche, **dadurch gekennzeichnet, daß** das metallische Bauteil vor dem Hindurchdrücken der Hartmetallkugel(n) kaltverfestigt oder vergütet wird.

## Claims

1. A method for increasing the dynamic pressure resistance of a metallic component for high-pressure applications with a tubular internal space, in which a hard metal ball is forced under high pressure by means of a liquid under pressure through the interior of the tubular inner space, wherein the hard metal ball is of a diameter larger by between 1 and 5 % than the inside diameter of the tubular internal space before the hard metal ball is forced therethrough, wherein the pressure with which the hard metal ball is forced through the tubular internal space of the component is in the range of between 2000 and 7000 bars.

2. A method as set forth in claim 1, **characterised in that** the pressure with which the hard metal ball is forced through the tubular internal space of the component is in the range of between 3000 and 6000 bars, preferably in the range of between 3500 and 5500 bars.

3. A method as set forth in one of claims 1 or 2, **characterised in that** the pressure with which the hard metal ball is forced through the tubular internal space of the component is produced by means of an oil under pressure.

4. A method as set forth in one of claims 1 through 3, **characterised in that** the diameter of the hard metal ball is larger by between 1.5 and 4 %, particularly preferably by between 2 and 3 %, than the inside diameter of the tubular internal space of the component before the hard metal ball is forced therethrough.

5. A method as set forth in one of claims 1 through 4, **characterised in that** hard metal balls are moved under high pressure through the tubular internal space of the component a plurality of time in succession, preferably between two and four times in succession, particularly preferably twice in succession, wherein the hard metal balls are of increasing diameters in the sequence in which they are successively forced under high pressure through the tubular internal space of the component.

6. A method as set forth in one of the preceding claims, **characterised in that** the metallic component is produced from an unalloyed, low-alloyed or high-alloyed steel, preferably a high-alloyed steel.

7. A method as set forth in one of the preceding claims, **characterised in that** the metallic component is solution-annealed prior to the hard metal ball or balls being forced therethrough.

8. A method as set forth in one of the preceding claims, **characterised in that** the metallic component is subjected to cold work-hardening or age hardening prior to the hard metal ball or balls being forced therethrough.

## Revendications

1. Procédé destiné à augmenter la résistance dynamique à la pression d'un composant métallique pour applications haute pression, ayant un espace intérieur tubulaire, dans lequel on pousse une sphère en métal dur sous haute pression au moyen d'un fluide sous pression à travers l'intérieur de l'espace tubulaire, la sphère en métal dur ayant un diamètre supérieur de 1 à 5 % au diamètre intérieur de l'espace intérieur tubulaire avant le passage à force de la sphère en métal dur, la pression appliquée pour pousser la sphère en métal dur à travers l'espace intérieur tubulaire du composant se situant dans la plage de 2000 à 7000 bar.

2. Procédé selon la revendication 1, **caractérisé en ce que** la pression appliquée pour pousser la sphère en métal dur à travers l'espace intérieur tubulaire du composant se situe dans la plage de 3000 à 6000 bar, de préférence, dans la plage de 3500 à 5500 bar.

3. Procédé selon la revendication 1 ou 2, **caractérisé en ce que** la pression appliquée pour pousser la sphère en métal dur à travers l'espace intérieur tubulaire du composant est générée au moyen d'une huile sous pression.

4. Procédé selon l'une des revendications 1 à 3, **caractérisé en ce que** le diamètre de la sphère en métal dur est supérieur de 1,5 à 4 %, en particulier, de préférence, de 2 à 3 % au diamètre intérieur de l'espace intérieur tubulaire du composant avant le passage à force de la sphère en métal dur.

5. Procédé selon l'une des revendications 1 à 4, **caractérisé en ce que** des sphères en métal dur sont poussées l'une après l'autre sous haute pression à travers l'espace intérieur tubulaire du composant à plusieurs reprises, en particulier, de préférence, de deux à quatre fois, en particulier, de préférence, deux fois l'une après l'autre, les diamètres des sphères en métal dur allant en augmentant dans l'ordre dans lequel elles sont poussées l'une après l'autre sous haute pression à travers l'espace intérieur tubulaire du composant.

6. Procédé selon l'une des revendications précédentes, **caractérisé en ce que** le composant métallique est réalisé en acier non allié, faiblement allié ou fortement allié, de préférence en acier fortement allié.

7. Procédé selon l'une des revendications précédentes, **caractérisé en ce que** le composant métallique est soumis à un recuit de mise en solution avant le passage à force de la/des sphère(s) en métal dur.

8. Procédé selon l'une des revendications précédentes, **caractérisé en ce que** le composant métallique est écroui ou trempé et revenu avant le passage à force de la/des sphère(s) en métal dur.
